# EUROPEAN PATENT SPECIFICATION

(11) **EP 2 714 452 B1**
(45) Date of publication and mention of the grant of the patent: **30.09.2015**
(21) Application number: 12729701.8
(22) Date of filing: 10.05.2012
(51) Int. Cl.: B60K 17/16, B62D 59/02

(54) **DRIVE SHAFT, MOTOR VEHICLE OR TRAILER COMPRISING SUCH A DRIVE SHAFT AND METHOD FOR ADAPTING A DRIVE SHAFT**
ANTRIEBSWELLE, FAHRZEUG ODER ANHÄNGER MIT EINER SOLCHEN EINER ANTRIEBSWELLE UND VERFAHREN ZUR ANPASSUNG EINER ANTRIEBSWELLE
ARBRE DE TRANSMISSION, VÉHICULE À MOTEUR OU REMORQUE COMPRENANT CET ARBRE DE TRANSMISSION ET PROCÉDÉ D'ADAPTATION D'UN ARBRE DE TRANSMISSION

(30) Priority: 30.05.2011 BE 201100331
(43) Date of publication of application: 09.04.2014
(73) Proprietor: Bvba Agro Techniek Bonne, 8340 Damme (BE); Strobbe Engineering, 8730 Beernem (BE)
(72) Inventor: BONNE, Geert, Johan, Lucien, B-8340 Damme (BE); STROBBE, Danny, Hendrik, Maria, B-8730 Beernem (BE); STROBBE, Geert, Hilaire, Albert, B-8730 Beernem (BE)
(74) Representative: Hostens, Veerle
(86) International application number: PCT/IB2012/000909
(87) International publication number: WO 2013/050835

(56) References cited:
- DE-A1- 3 920 934
- DE-B- 1 167 660
- GB-A- 855 243
- GB-A- 2 297 068

## Description

The present invention relates to a drive shaft for a motor vehicle or a trailer as known from GB 2 297 068, comprising:
- coupling means for coupling the drive shaft to a power source;
- a first wheel flange at its first end and a second wheel flange at its second end;
- a first half-shaft which connects the first wheel flange to the coupling means and a second half-shaft which connects the second wheel flange to the coupling means;
- central transmission means for transmitting a driving movement of the power source to a rotating movement of the half-shafts;
- first transmission means for transmitting a rotating movement of the first half-shaft to a rotating movement of the first wheel flange;
- second transmission means for transmitting a rotating movement of the second half-shaft to a rotating movement of the second wheel flange;
- first disconnecting means for disconnecting the transmission of the first transmission means;
- second disconnecting means for disconnecting the transmission of the second transmission means.

As is known, such drive shafts may also be designed as steering shafts.

In addition, the present invention relates to a motor vehicle or a trailer comprising such a drive shaft. More specifically, the present invention is used in heavy agricultural vehicles for moving earth or transportation or trailers for tractors or heavy off-road vehicles, such as tipping trailers, telescopic cranes, silage trailers, etc. Such heavy motor vehicles usually comprise several driven shafts. Such heavy trailers comprise one or more drive shafts which are driven together with one or more shafts of the vehicle which pulls this trailer.

Furthermore, the present invention relates to a method for adapting a drive shaft to produce a drive shaft according to the present invention.

With these applications, drive shafts are mechanically coupled to a power source, either directly or via a power take-off of the power source. With current applications, the drive shaft distributes the rotary movement of the power source (either directly or via the power take-off) always via a differential gear over the wheels which are mounted on the wheel flanges. This differential gear makes it possible for both wheels to rotate at different speeds, so that bends can be taken smoothly. The speed of the power source is usually reduced by means of this differential gear, so that the drive shafts have a reduction of, for example, approximately 6/1. Often, drive shafts furthermore have additional reduction means in order to reduce the speed further towards the wheels. This is usually effected by means of a so-called planet gear at the location of the wheel flanges. With this additional reduction, it is for example possible to achieve a total reduction of approximately 20/1. In this way, a much greater torque on the wheels is achieved. The greater the reduction, the more the torque on the wheels is increased with respect to the input torque.

A known problem with common differential gears is that the torque is always evenly distributed over the two wheels, so that the two half-shafts always have the same torque, irrespective of the speed of rotation of the wheels. This has the drawback that the torque which can be passed on to the ground under the wheels is determined by the wheel which has the lowest ability to transmit torque. When a wheel comes off the ground, the drive is lost. This can be remedied by means of so-called controlled slip differentials, in which case a different torque on both wheels is temporarily possible. However, the known controlled slip differential gears are usually insufficiently strong for the abovementioned applications with heavy agricultural vehicles and heavy off-road vehicles. In addition, such controlled slip differential gears are usually deemed to be too expensive for such applications.

In so-called four-wheel drive vehicles which, in normal use, generally drive on metalled roads and only sometimes drive on unmetalled terrain, it is therefore possible to switch between 2-wheel drive and 4-wheel drive. These four wheel drive vehicles are provided with disconnecting means in order to drive on only one shaft during use on metalled roads and to be able to switch on the drive on a second shaft temporarily. Metalled roads only require one shaft to be driven so that driving on both shafts would result in a situation where the wheels actually drive the shaft. The reduction on the drive shaft uses a lot of power and causes wear of the tyres. By driving a single shaft during use on metalled roads, the fuel consumption is thus reduced. However, the problem of the loss of drive when a wheel comes off the ground can be remedied by means of the drive on the second shaft, provided the wheels of this second shaft have a sufficiently good grip on the ground. However, if a wheel of the second shaft also has insufficient grip on the ground, the problem remains.

With relatively heavy off-road vehicles and heavy agricultural vehicles in which several shafts are driven, no such disconnecting means are provided to switch off a drive shaft temporarily, since several shafts actually have to be driven during normal use on the terrain. As the reduction in increased fuel consumption caused by these heavy off-road vehicles and heavy agricultural vehicles using the roads does not warrant the additional costs of the known disconnecting means, the disconnecting means which are expensive and often also insufficiently strong for these applications is omitted with such applications.

It is therefore an object of the present invention to provide a drive shaft by means of which the abovementioned problems can be solved in an alternative manner, so that these can also be solved for relatively heavy off-road vehicles and heavy agricultural vehicles, in which the drive shaft can be made sufficiently strong and in which the additional costs can be compensated for by the reduction of the increased fuel consumption when such relatively heavy off-road vehicles and heavy agricultural vehicles are used on metalled roads.

This object of the invention is achieved in the first place by providing a drive shaft for a motor vehicle or a trailer, comprising:
- coupling means for coupling the drive shaft to a power source;
- a first wheel flange at its first end and a second wheel flange at its second end;
- a first half-shaft which connects the first wheel flange to the coupling means and a second half-shaft which connects the second wheel flange to the coupling means, in which the first half-shaft and the second half-shaft can be or are rigidly connected to each other;
- central transmission means for transmitting a driving movement of the power source to a rotating movement of the half-shafts;
- first transmission means for transmitting a rotating movement of the first half-shaft to a rotating movement of the first wheel flange;
- second transmission means for transmitting a rotating movement of the second half-shaft to a rotating movement of the second wheel flange;
- first disconnecting means for disconnecting the transmission of the first transmission means; and
- second disconnecting means for disconnecting the transmission of the second transmission means, in which the transmission of the first transmission means and the transmission of the second transmission means can be disconnected separately by means of the first or the second disconnecting means, respectively.

By making it possible for the connection between the first and the second half-shaft to be rigid, the differential gear, being a relatively expensive part of a drive shaft, can be omitted. In this way, it is possible to produce a drive shaft in which the additional costs of the disconnecting means can be compensated for by the reduction of the increased fuel consumption when using such relatively heavy off-road vehicles and heavy agricultural vehicles on metalled roads.

By making it possible for the connection between the half-shafts to be rigid, the problem of drive being lost if one or both wheels no longer has any grip on the ground is solved. The drawback of rigid shafts, in which both wheels rotate at the same speed (and therefore bends cannot be taken smoothly), is overcome by making it possible to disconnect the transmission of the transmission means separately by means of the disconnecting means. It is then possible to temporarily disconnect one or both wheels of a drive shaft in bends in order to be able to take a bend in a smooth manner.

The first and the second disconnecting means are provided at the location of the first and the second transmission means and thus at the location of the wheels. In this way, it is possible to disconnect the drive to the wheels in a more secure way than is the case with disconnecting means in which disconnecting is carried out at the location of the coupling means of the power take-off. When disconnection takes place at the location of the wheels, the wheels can rotate freely when this is required.

On the road, where not all drive shafts need to be driven, both wheels of one of the drive shafts can be disconnected. Then, only the hub of the wheel mounted on heavy bearings (for example conical roller bearings) rotates, as if it were a non-driven shaft. The required power and consequently also the consumption of the power source are reduced.

In a particular embodiment of a drive shaft according to the present invention, the first transmission means comprise first end reduction means for reducing the rotating movement of the first wheel flange with respect to the rotating movement of the first half-shaft, and the second transmission means comprise second end reduction means for reducing the rotating movement of the second wheel flange with respect to the rotating movement of the second half-shaft, the first disconnecting means are positioned between the first end reduction means and the first wheel flange and the second disconnecting means are positioned between the second end reduction means and the second wheel flange. Preferably, in this case, the end reduction means are designed as a planet gear.

On the road, where not all the drive shafts need to be driven, and when both wheels of one of the drive shafts are disconnected, no transmission takes place by the gear wheels of the planet gear anymore. In this way, there is no friction and no wear of these gear wheels. On the road, the entire gear wheel transmission normally rotates at the highest speed. Now, only the hub of the wheel mounted on two heavy bearings rotates, as if it were a non-driven shaft. The required power and consequently also the consumption of the power source are greatly reduced.

The central transmission means of a drive shaft according to the present invention may, more specifically, be designed as a controlled slip differential gear in order to make a rigid connection between the first half-shaft and the second half-shaft possible.

The separate disconnection of the wheels in combination with the temporary rigid connection of the half-shafts can offer the abovementioned advantages in applications other than the heavy off-road vehicles and heavy agricultural vehicles as well. In view of such advantages, the additional costs of providing the separately disconnectable disconnecting means may be justifiable, even if a differential gear is additionally provided. This differential gear is then, according to the invention, designed as a controlled slip differential gear in order to make a rigid connection of the half-shafts possible. Thus, the advantages of being able to take bends with a differential gear are combined with the advantages of a rigid connection of the half-shafts and the separate disconnection of the wheels.

In a specific embodiment of such a drive shaft with controlled slip differential gear, the driving movement of the power source is a rotating movement and the controlled slip differential gear is designed as a reduction means for reducing the rotating movement of the first and the second half-shaft with respect to the rotating movement of the power source.

In a preferred embodiment of a drive shaft according to the present invention, the disconnecting means comprise a claw coupling.

The disconnecting means of a drive shaft according to the present invention may comprise hydraulic, electrical, pneumatic, mechanical or magnetic means.

Preferably, the first disconnecting means and the second disconnecting means comprise a respective spring, the spring force of which promotes disconnection. If, in such an embodiment, the disconnecting means comprise hydraulic, electrical, pneumatic, mechanical or magnetic means, then these hydraulic, electrical, pneumatic, mechanical or magnetic means preferably counteract the spring force of the respective spring in order to achieve transmission by the respective transmission means.

A particular embodiment of a drive shaft according to the present invention is designed as a steering shaft.
The object of the present invention is also achieved by providing a motor vehicle or a trailer comprising at least one drive shaft according to the present invention.

Such a preferred motor vehicle or such a preferred trailer comprises at least a first drive shaft and a second drive shaft according to the present invention, in which the transmission of the first and the second transmission means of the first drive shaft and the transmission of the first and the second transmission means of the second drive shaft can all be disconnected separately by means of the respective disconnecting means.

The object of the present invention is furthermore also achieved by providing a method for adapting a drive shaft, comprising:
- a differential gear for coupling the drive shaft to a power source;
- a first wheel flange at its first end and a second wheel flange at its second end;
- a first half-shaft which connects the first wheel flange to the differential gear and a second half-shaft which connects the second wheel flange to the differential gear;
- first transmission means for transmitting a rotating movement of the first half-shaft to a rotating movement of the first wheel flange;
- second transmission means for transmitting a rotating movement of the second half-shaft to a rotating movement of the second wheel flange;
- first disconnecting means for disconnecting the transmission of the first transmission means;
- second disconnecting means for disconnecting the transmission of the second transmission means;
in which the differential gear is bridged in order to rigidly connect the half-shafts to one another.

In addition, the object of the invention is achieved by providing a method for adapting a drive shaft, comprising:
- a differential gear for coupling the drive shaft to a power source;
- a first wheel flange at its first end and a second wheel flange at its second end;
- a first half-shaft which connects the first wheel flange to the differential gear and a second half-shaft which connects the second wheel flange to the differential gear;
- first transmission means for transmitting a rotating movement of the first half-shaft to a rotating movement of the first wheel flange;
- second transmission means for transmitting a rotating movement of the second half-shaft to a rotating movement of the second wheel flange;
in which first disconnecting means are provided at the end of the first half-shaft for disconnecting the transmission of the first transmission means, in which second disconnecting means are provided at the end of the second half-shaft for disconnecting the transmission of the second transmission means and in which the differential gear is bridged in order to rigidly connect the half-shafts to one another.

If the first transmission means of such a drive shaft comprise first end reduction means for reducing the rotating movement of the first wheel flange with respect to the rotating movement of the first half-shaft and the second transmission means comprise second end reduction means for reducing the rotating movement of the second wheel flange with respect to the rotating movement of the second half-shaft, then the first disconnecting means are preferably positioned between the first end reduction means and the first wheel flange and the second disconnecting means are preferably positioned between the second end reduction means and the second wheel flange.

Finally, the object of the invention is also achieved by providing a method for adapting a drive shaft, comprising:
- a controlled slip differential gear for coupling the drive shaft to a power source;
- a first wheel flange at its first end and a second wheel flange at its second end;
- a first half-shaft which connects the first wheel flange to the controlled slip differential gear and a second half-shaft which connects the second wheel flange to the controlled slip differential gear;
- first transmission means for transmitting a rotating movement of the first half-shaft to a rotating movement of the first wheel flange;
- second transmission means for transmitting a rotating movement of the second half-shaft to a rotating movement of the second wheel flange;
in which first disconnecting means are provided at the end of the first half-shaft for disconnecting the transmission of the first transmission means and in which second disconnecting means are provided at the end of the second half-shaft for disconnecting the transmission of the second transmission means.

If the first transmission means of such a drive shaft comprise first end reduction means for reducing the rotating movement of the first wheel flange with respect to the rotating movement of the first half-shaft and the second transmission means comprise second end reduction means for reducing the rotating movement of the second wheel flange with respect to the rotating movement of the second half-shaft, then the first disconnecting means are preferably positioned between the first end reduction means and the first wheel flange and the second disconnecting means are preferably positioned between the second end reduction means and the second wheel flange.

The present invention will now be explained in more detail by means of the following detailed description of some preferred embodiments of drive shafts according to the present invention. The aim of this description is solely to give illustrative examples and to indicate further advantages and details of the invention, and can therefore by no means be interpreted as a limitation of the area of application of the invention or of the patent rights defined in the claims.

In this detailed description, reference numerals are used to refer to the attached drawings, in which:
- *Fig. 1* shows a composite drive shaft in longitudinal section, comprising a first end with planetary end reduction of a first embodiment of a drive shaft according to the present invention and a second end with end reduction of a second embodiment of a drive shaft according to the present invention;
- *Fig.* 2 shows a drive shaft in longitudinal section which has been adapted according to the invention to produce a preferred embodiment of a drive shaft according to the invention;
- *Fig. 3* shows the first end of the composite drive shaft from Fig. 1 in more detail;
- *Fig. 4* shows the second end of the composite drive shaft from Fig. 1 in more detail;
- *Fig. 5* shows an end of the drive shaft from Fig. 2 in more detail.

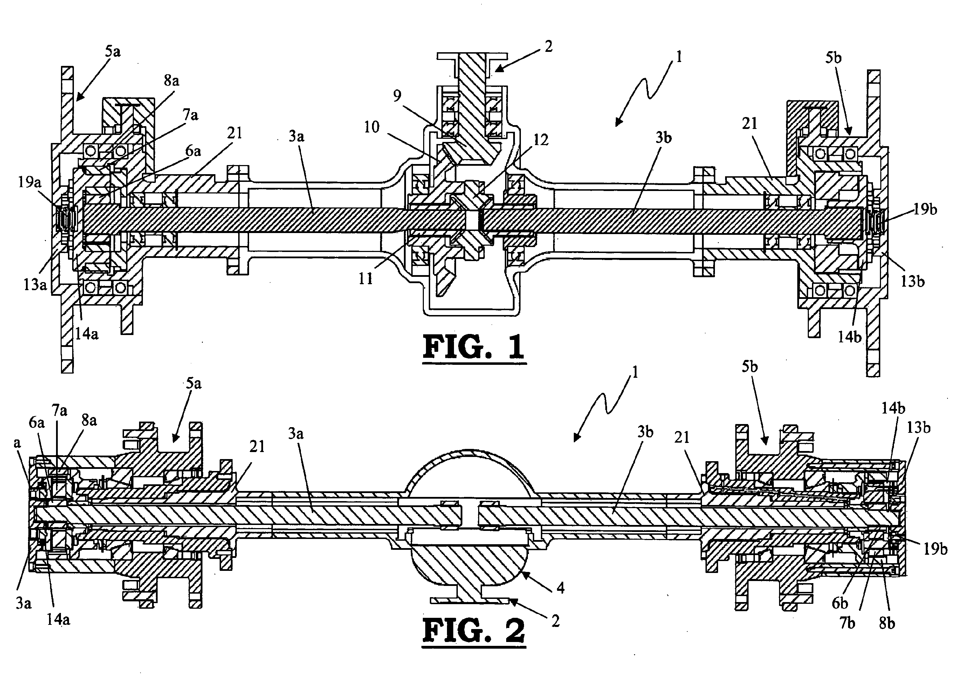

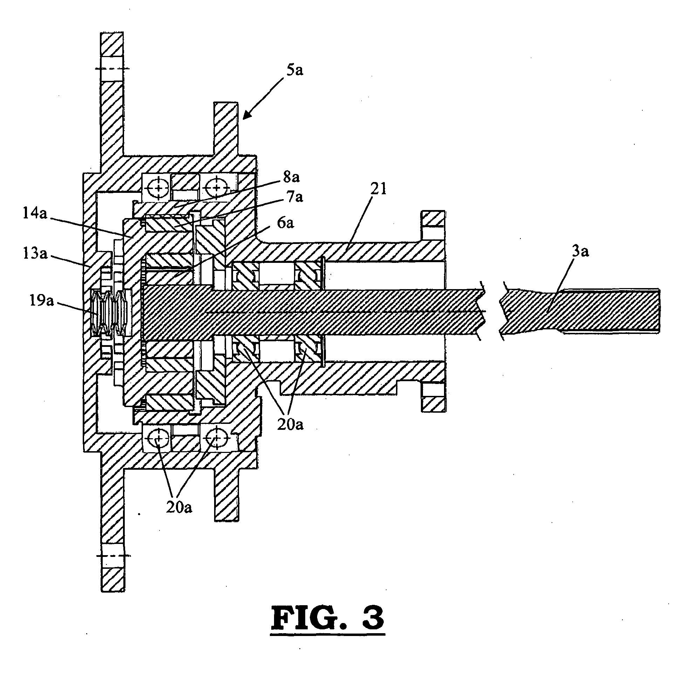

Figs. 1-5 show various embodiments of drive shafts (1) according to the invention. For the sake of simplicity, no steering shafts were illustrated. However, based on the explanation, it will also be clear to those skilled in the art how drive shafts (1) can be adapted according to the invention to form steering shafts.

The drive shafts (1) from Figs. 1 and 2 are designed to be fitted in a trailer for an agricultural vehicle. These can be coupled by means of the coupling means (2) and use a power take-off of a tractor as power source.

For illustration purposes, Fig. 1 shows two different possible ends for the drive shaft (1), one with end reduction means (6a, 7a, 8a) and one without end reduction means. Fig. 2 shows preferred ends for a drive shaft (1) according to the invention which are produced by adapting an existing drive shaft (1). In this case, both ends are of virtually identical design as one another's mirror image and comprise end reduction means (6a, 7a, 8a, 6b, 7b, 8b).

The drive shafts (1) in each case distribute the rotary movement of the power take-off (cardan shaft) of the tractor via the half-shafts (3a, 3b) to the wheels which are mounted on the wheel flanges (5a, 5b). In Fig. 1, the drive shaft (1) to this end still comprises a differential gear (9, 10, 11, 12) as transmission means (4) which is constructed in the known manner with a bevel gear wheel (9) which, after it has been connected to the cardan shaft, is situated on the end of the cardan shaft, a crown wheel (10), bevel gear wheels (11) and planet wheels (12). According to the invention, this differential gear (9, 10, 11, 12) is either bridged, so that a rigid connection between the half-shafts (3a, 3b) is produced, or configured as a controlled slip differential gear (9, 10, 11, 12), so that it is possible to temporarily rigidly connect the half-shafts (3a, 3b) to each other. The transmission means (4) in the drive shaft (1) in Fig. 2 have not been shown in detail, but can be designed in a known manner by a person skilled in the art, taking into account the requirements according to the invention.

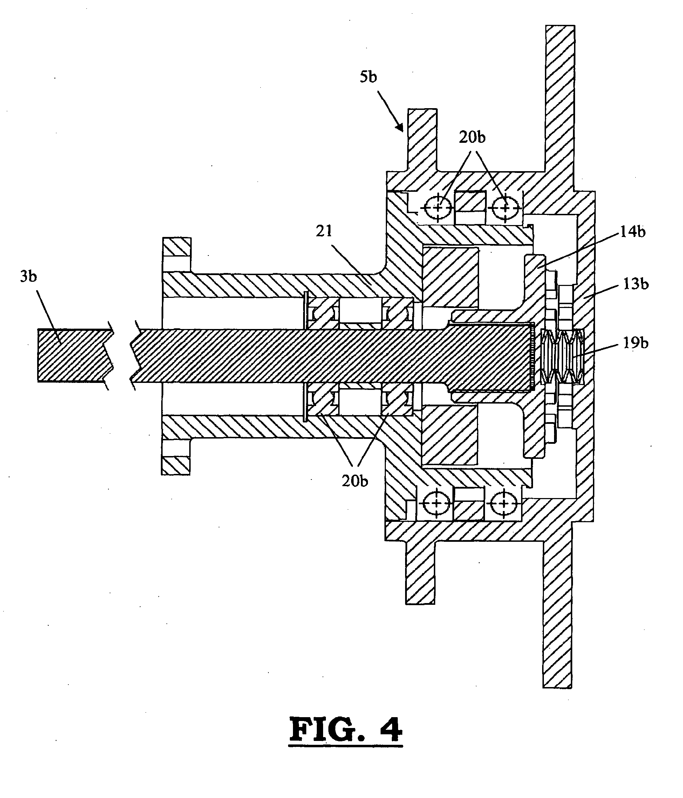

In a known manner, the end reduction means (6a, 7a, 8a, 6b, 7b, 8b) are in each case designed as a planet gear (6a, 7a, 8a, 6b, 7b, 8b) with a sun wheel (6a, 6b) which is fixed in a known manner by a groove connection to the respective half-shaft (3a, 3b), a ring gear (crown gear) (8a, 8b) which is fixedly connected in a known manner by a groove connection to the housing (21) of the drive shaft (1) and planet wheels (planet gears) (7a, 7b) which are arranged rotatably between the sun wheel (6a, 6b) and the ring gear (8a, 8b). As mentioned, the embodiment from the right-hand side of the drive shaft (1) from Fig. 1, as also illustrated in Fig. 4, does not comprise any such end reduction means (6a, 7a, 8a, 6b, 7b, 8b).

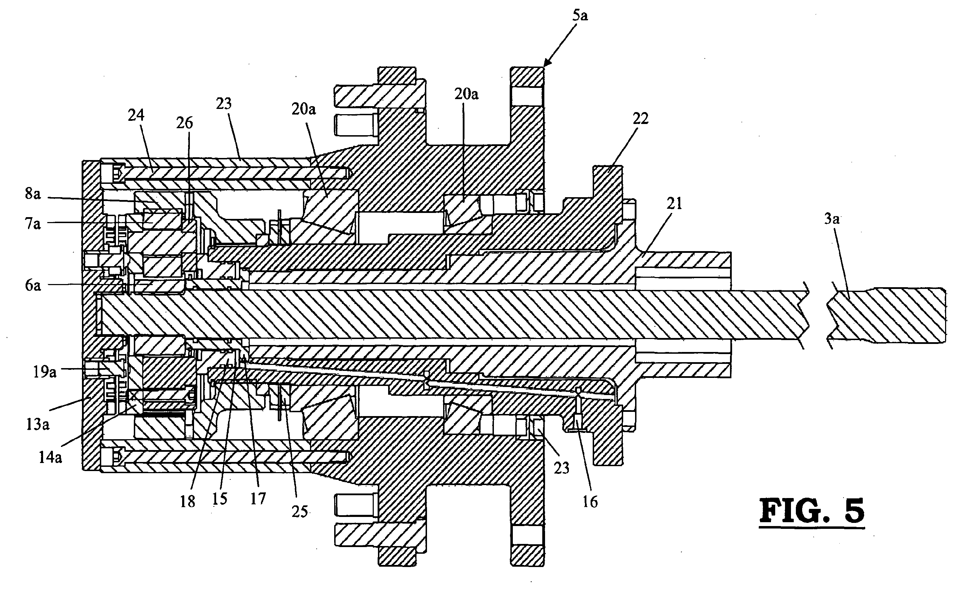

As is known, the half-shafts (3a, 3b) are in each case installed in the fixedly arranged housing (21) so as to be able to rotate by means of bearings (20a, 20b). As is known, the wheel flanges (5a, 5b) are also fitted to the housing (21) so as to be able to rotate by means of bearings (20a, 20b). In the embodiments from Figs. 1, 3 and 4, the bearings (20a, 20b) used for this purpose are ball bearings. In the preferred embodiment from Figs. 2 and 5, the bearings (20a, 20b) used are conical roller bearings.

In order to now make it possible to disconnect the transmission of the movement of the half-shafts (3a, 3b) to the movement of the wheel flanges (5a, 5b) separately according to the invention, the illustrated drive shafts (1) in each case comprise one claw coupling (13a, 13b, 14a, 14b) per wheel flange (5a, 5b). In addition, the drive shafts (1) comprise one spring (19a, 19b) per wheel flange (5a, 5b), the spring force of which promotes the disconnection of the claw coupling and thus the decoupling of the respective wheel flange (5a, 5b) of the respective half-shaft (3a, 3b). By means of, for example, pneumatic means (15, 16), the claw coupling (13a, 13b, 14a, 14b) can be engaged, if desired. These pneumatic means (15, 16) are only shown in Fig. 5, but according to the invention these are analogously provided in the other illustrated embodiments and the operation thereof is further explained by means of the following description of the embodiment from Fig. 5. Equally, it is for example also possible to use hydraulic, electrical, magnetic or mechanical means instead of such pneumatic means (15, 16) in order to effect engagement of the claw coupling (13a, 13b, 14a, 14b). However, according to the invention, it should be ensured in each case that the disconnecting means (13a, 14a, 15, 16, 17, 18) for disconnecting the transmission of the transmission means (6a, 7a, 8a, 13a, 14a) for transmitting the movement of the half-shaft (3a) to the wheel flange (5a) on the left-hand side can be driven separately from the disconnecting means (13b, 14b, 15, 16, 17, 18) for disconnecting the transmission of the transmission means (6b, 7b, 8b, 13b, 14b) for transmitting the movement of the half-shaft (3b) to the wheel flange (5b) on the right-hand side.

The drive shaft (1) from Fig. 5 can be produced by adapting an existing drive shaft (1). In that case, the coupling bush (22) is pushed onto the housing of the drive shaft (1) and milled. If no existing drive shaft (1) is used, but a new drive shaft (1) according to the invention is made, no such coupling bush (22) is required but the elements of said coupling bush (22) can be fitted directly in the housing (21).

The coupling bush (22) and the housing (21) are stationary (i.e. non-rotating) parts. The wheel flange (5a) is fitted on the coupling bush (22) via roller bearings (20a). Axial play is compensated for by means of two nuts with a locking flange (25). A double sealing ring (23) is provided on one side of the wheel flange (5a). On the end of the coupling bush (22), grooves are provided in which the crown gear (8a) is fitted in order to fixedly connect the latter to the housing (21). Grooves are also provided on the half-shaft (3a) and onto these the sun wheel (6a) is fitted, the planet gears (7a) rotate between the sun wheel (6a) and the crown gear (8a). The planet gears (7a) are fitted between two flanges (14a, 26). The outer flange (14a) is provided with claws which can engage with the claws on an end flange (13a) which is fixedly fitted to the wheel flange (5a) by means of a sleeve (23) with bolts (24).

Springs are provided on the end flange (13a) which in each case keep the claws of the outer flange (14a) of the planet gears (7a) and the claws of the end flange (13a) disconnected by means of a slight pressure. In this embodiment with pneumatic means (15, 16), air pressure is provided via a duct (16) in an air chamber (15). Said air chamber (15) is situated between a first sleeve (17) which acts like a cylinder and a second sleeve (18) which serves as a piston. The air pressure causes the piston sleeve (18) to move with respect to the cylinder sleeve (17). The piston sleeve (18) in turn causes the flanges (26, 14a) of the planet gears (7a) to move, which thus connect to the end flange (13a) by means of the claws on the outer flange (14a) of the planet gears (7a) and the claws on the end flange (13a). In this way, the rotating movement of the flanges (26, 14a) of the planet gears (7a) is transmitted to the wheel flange (5a). The wheel which is fitted on the wheel flange (5a) (but not shown), is now driven by the half-shaft (3a). If the air pressure is lost, the outer flange (14a) of the planet gears (7a) is pushed out of the claws of the end flange (13a) on account of the spring force of the spring (19a) and the drive is lost.

## Claims

1. Drive shaft (1) for a motor vehicle or a trailer, comprising:
- coupling means (2) for coupling the drive shaft (1) to a power source;
- a first wheel flange (5a) at its first end and a second wheel flange (5b) at its second end;
- a first half-shaft (3a) which connects the first wheel flange (5a) to the coupling means (2) and a second half-shaft (3b) which connects the second wheel flange (5b) to the coupling means (2);
- central transmission means (4, 9, 10, 11, 12) for transmitting a driving movement of the power source to a rotating movement of the half-shafts (3a, 3b);
- first transmission means (6a, 7a, 8a, 13a, 14a) for transmitting a rotating movement of the first half-shaft (3a) to a rotating movement of the first wheel flange (5a);
- second transmission means (6b, 7b, 8b, 13b, 14b) for transmitting a rotating movement of the second half-shaft (3b) to a rotating movement of the second wheel flange (5b);
- first disconnectirtg means (13a, 14a, 15, 16, 17, 18) for disconnecting the transmission of the first transmission means (6a, 7a, 8a, 13a, 14a);
- second disconnecting means (13b, 14b, 15, 16, 17, 18) for disconnecting the transmission of the second transmission means (6b, 7b, 8b, 13b, 14b);
**characterized in that**
- the first half-shaft (3a) and the second half-shaft (3b) can be or are rigidly connected to each other;
- the transmission of the first transmission means (6a, 7a, 8a, 13a, 14a) and the transmission of the second transmission means (6b, 7b, 8b, 13b, 14b) can be disconnected separately by means of the first (13a, 14a, 15, 16, 17, 18) or the second (13b, 14b, 15, 16, 17, 18) disconnecting means, respectively.

2. Drive shaft (1) according to Claim 1, **characterized in that** the first transmission means (6a, 7a, 8a, 13a, 14a) comprise first end reduction means (6a, 7a, 8a) for reducing the rotating movement of the first wheel flange (5a) with respect to the rotating movement of the first half-shaft (3a), and the second transmission means (6b, 7b, 8b, 13b, 14b) comprise second end reduction means (6b, 7b, 8b) for reducing the rotating movement of the second wheel flange (5b) with respect to the rotating movement of the second half-shaft (3b), and **in that** the first disconnecting means (13a, 14a, 15, 16, 17, 18) are positioned between the first end reduction means (6a, 7a, 8a) and the first wheel flange (5a) and the second disconnecting means (13b, 14b, 15, 16, 17, 18) are positioned between the second end reduction means (6b, 7b, 8b) and the second wheel flange (5b).

3. Drive shaft (1) according to Claim 2, **characterized in that** the end reduction means (6a, 7a, 8a, 6b, 7b, 8b) are designed as a planet gear system (6a, 7a, 8a, 6b, 7b, 8b).

4. Drive shaft (1) according to one of the preceding claims, **characterized in that** the central transmission means (4, 9, 10, 11, 12) are designed as a controlled slip differential gear (9, 10, 11, 12) in order to make a rigid connection between the first half-shaft (3a) and the second half-shaft (3b) possible.

5. Drive shaft (1) according to Claim 4, **characterized in that** the driving movement of the power source is a rotating movement and **in that** the controlled slip differential gear (9, 10, 11, 12) is designed as a reduction means (10, 12) for reducing the rotating movement of the first (3a) and the second (3b) half-shaft with respect to the rotating movement of the power source.

6. Drive shaft (1) according to one of the preceding claims, **characterized in that** the disconnecting means (13a, 13b, 14a, 14b, 15, 16, 17, 18) comprise a claw coupling (13a, 13b, 14a, 14b).

7. Drive shaft (1) according to one of the preceding claims, **characterized in that** the disconnecting means (13a, 13b, 14a, 14b, 15, 16, 17, 18) comprise hydraulic, electrical, pneumatic, mechanical or magnetic means (15, 16).

8. Drive shaft (1) according to one of the preceding claims, **characterized in that** the first disconnecting means (13a, 14a, 15, 16, 17, 18) and the second disconnecting means (13b, 14b, 15, 16, 17, 18) comprise a respective spring (19a, 19b), the spring force of which promotes the disconnection.

9. Drive shaft (1) according to Claim 7 and 8, **characterized in that** the hydraulic, electrical, pneumatic, mechanical or magnetic means (15, 16) counteract the spring force of the respective spring (19a, 19b) in order to achieve transmission by the respective transmission means (6a, 7a, 8a, 13a, 14a, 6b, 7b, 8b, 13b, 14b).

10. Drive shaft (1) according to one of the preceding claims, **characterized in that** it is designed as a steering shaft.

11. Motor vehicle or trailer comprising at least one drive shaft (1) according to one of the preceding claims.

12. Motor vehicle or trailer according to Claim 11, **characterized in that** said motor vehicle or said trailer comprises at least a first drive shaft (1) and a second drive shaft (1) according to one of Claims 1 to 10, in which the transmission of the first (6a, 7a, 8a, 13a, 14a) and the second (6b, 7b, 8b, 13b, 14b) transmission means of the first drive shaft (1) and the transmission of the first (6a, 7a, 8a, 13a, 14a) and the second (6b, 7b, 8b, 13b, 14b) transmission means of the second drive shaft (1) can all be disconnected separately by means of the respective disconnecting means (13a, 14a, 13b, 14b, 15, 16, 17, 18).

13. Method for adapting a drive shaft (1), comprising:
- a differential gear (9, 10, 11, 12) for coupling the drive shaft (1) to a power source;
- a first wheel flange (5a) at its first end and a second wheel flange (5b) at its second end;
- a first half-shaft (3a) which connects the first wheel flange (5a) to the differential gear (9, 10, 11, 12) and a second half-shaft (3b) which connects the second wheel flange (5b) to the differential gear (9, 10, 11, 12);
- first transmission means (6a, 7a, 8a, 13a, 14a) for transmitting a rotating movement of the first half-shaft (3a) to a rotating movement of the first wheel flange (5a);
- second transmission means (6b, 7b, 8b, 13b, 14b) for transmitting a rotating movement of the second half-shaft (3b) to a rotating movement of the second wheel flange (5b);
- first disconnecting means (13a, 14a, 15, 16, 17, 18) for disconnecting the transmission of the first transmission means (6a, 7a, 8a, 13a, 14a);
- second disconnecting means (13b, 14b, 15, 16, 17, 18) for disconnecting the transmission of the second transmission means (6b, 7b, 8b, 13b, 14b);
**characterized in that** the differential gear (9, 10, 11, 12) is bridged in order to rigidly connect the half-shafts (3a, 3b) to one another.

14. Method for adapting a drive shaft (1), comprising:
- a differential gear (9, 10, 11, 12) for coupling the drive shaft (1) to a power source;
- a first wheel flange (5a) at its first end and a second wheel flange (5b) at its second end;
- a first half-shaft (3a) which connects the first wheel flange (5a) to the differential gear (9, 10, 11, 12) and a second half-shaft (3b) which connects the second wheel flange (5b) to the differential gear (9, 10, 11, 12);
- first transmission means (6a, 7a, 8a, 13a, 14a) for transmitting a rotating movement of the first half-shaft (3a) to a rotating movement of the first wheel flange (5a);
- second transmission means (6b, 7b, 8b, 13b, 14b) for transmitting a rotating movement of the second half-shaft (3b) to a rotating movement of the second wheel flange (5b);
**characterized in that** first disconnecting means (13a, 14a, 15, 16, 17, 18) are provided at the end of the first half-shaft (3a) for disconnecting the transmission of the first transmission means (6a, 7a, 8a, 13a, 14a), **in that** second disconnecting means (13b, 14b, 15, 16, 17, 18) are provided at the end of the second half-shaft (3b) for disconnecting the transmission of the second transmission means (6b, 7b, 8b, 13b, 14b) and **in that** the differential gear (9, 10, 11, 12) is bridged in order to rigidly connect the half-shafts (3a, 3b) to one another.

15. Method for adapting a drive shaft (1), comprising:
- a controlled slip differential gear (9, 10, 11, 12) for coupling the drive shaft (1) to a power source;
- a first wheel flange (5a) at its first end and a second wheel flange (5b) at its second end;
- a first half shaft (3a) which connects the first wheel flange (5a) to the controlled slip differential gear (9, 10, 11, 12) and a second half-shaft (3b) which connects the second wheel flange (5b) to the controlled slip differential gear (9, 10, 11, 12);
- first transmission means (6a, 7a, 8a, 13a, 14a) for transmitting a rotating movement of the first half-shaft (3a) to a rotating movement of the first wheel flange (5a);
- second transmission means (6b, 7b, 8b, 13b, 14b) for transmitting a rotating movement of the second half-shaft (3b) to a rotating movement of the second wheel flange (5b);
**characterized in that** first disconnecting means (13a, 14a, 15, 16, 17, 18) are provided at the end of the first half-shaft (3a) for disconnecting the transmission of the first transmission means (6a, 7a, 8a, 13a, 14a) and **in that** second disconnecting means (13b, 14b, 15, 16, 17, 18) are provided at the end of the second half-shaft (3b) for disconnecting the transmission of the second transmission means (6b, 7b, 8b, 13b, 14b).

16. Method according to Claim 14 or 15, **characterized in that** the first transmission means (6a, 7a, 8a, 13a, 14a) comprise first end reduction means (6a, 7a, 8a) for reducing the rotating movement of the first wheel flange (5a) with respect to the rotating movement of the first half-shaft (3a) and second transmission means (6b, 7b, 8b, 13b, 14b), second end reduction means (6b, 7b, 8b) for reducing the rotating movement of the second wheel flange (5b) with respect to the rotating movement of the second half-shaft (3b) and **in that** the first disconnecting means (13a, 14a, 15, 16, 17, 18) are positioned between the first end reduction means (6a, 7a, 8a) and the first wheel flange (5a) and the second disconnecting means (13b, 14b, 15, 16, 17, 18) are positioned between the second end reduction means (6b, 7b, 8b) and the second wheel flange (5b).

## Patentansprüche

1. Antriebswelle (1) für ein Kraftfahrzeug oder einen Anhänger, umfassend:
Kopplungsmittel (2) zum Koppeln der Antriebswelle (1) mit einer Stromquelle;
einen ersten Radflansch (5a) an ihrem ersten Ende und einen zweiten Radflansch (5b) an ihrem zweiten Ende;
eine erste Halbwelle (3a), die den ersten Radflansch (5a) mit dem Kopplungsmittel (2) verbindet, und eine zweite Halbwelle (3b), die den zweiten Radflansch (5b) mit dem Kopplungsmittel (2) verbindet;
zentrale Übertragungsmittel (4, 9, 10, 11, 12) zum Übertragen einer Antriebsbewegung der Stromquelle zu einer Drehbewegung der Halbwellen (3a, 3b);
erste Übertragungsmittel (6a, 7a, 8a, 13a, 14a) zum Übertragen einer Drehbewegung der ersten Halbwelle (3a) in eine Drehbewegung des ersten Randflansches (5a);
zweite Übertragungsmittel (6b, 7b, 8b, 13b, 14b) zum Übertragen einer Drehbewegung der zweiten Halbwelle (3b) zu einer Drehbewegung des zweiten Radflansches (5b);
erste Trennmittel (13a, 14a, 15, 16, 17, 18) zum Trennen der Übertragung der ersten Übertragungsmittel (6a, 7a, 8a, 13a, 14a);
zweite Trennmittel (13b, 14b, 15, 16, 17, 18) zum Trennen der Übertragung der zweiten Übertragungsmittel (6b, 7b, 8b, 13b, 14b);
**dadurch gekennzeichnet, dass**
die erste Halbwelle (3a) und die zweite Halbwelle (3b) starr miteinander verbunden sein können oder sind;
die Übertragung der ersten Übertragungsmittel (6a, 7a, 8a, 13a, 14a) und die Übertragung der zweiten Übertragungsmittel (6b, 7b, 8b, 13b, 14b) separat über Mittel der ersten (13a, 14a, 15, 16, 17, 18) bzw. der zweiten (13b, 14b, 15, 16, 17, 18) Trennmittel getrennt werden können.

2. Antriebswelle (1) nach Anspruch 1, **dadurch gekennzeichnet, dass**
die ersten Übertragungsmittel (6a, 7a, 8a, 13a, 14a) erste Endreduktionsmittel (6a, 7a, 8a) zum Reduzieren der Drehbewegung des ersten Radflansches (5a) in Bezug auf die Drehbewegung der ersten Halbwelle (3a) umfassen, und dadurch, dass
die zweiten Übertragungsmittel (6b, 7b, 8b, 13b, 14b) zweite Endreduktionsmitte.l (6b, 7b, 8b) zum Reduzieren der Drehbewegung des zweiten Radflansches (5b) in Bezug auf die Drehbewegung der zweiten Halbwelle (3a) umfassen, und dadurch, dass
die ersten Trennmittel (13a, 14a, 15, 16, 17, 18) zwischen den ersten Endreduktionsmitteln (6a, 7a, 8a) und dem ersten Radflansch (5a) angeordnet sind und die zweiten Trennmittel (13b, 14b, 15, 16, 17, 18) zwischen den zweiten Endreduktionsmitteln (6b, 7b, 8b) und dem zweiten Radflansch (5b) angeordnet sind.

3. Antriebswelle (1) nach Anspruch 2, **dadurch gekennzeichnet, dass** die Endreduktionsmittel (6a, 7a, 8a, 6b, 7b, 8b) als Planetengetriebe (6a, 7a, 8a, 6b, 7b, 8b) ausgestaltet sind.

4. Antriebswelle (1) nach einem der vorhergehenden Ansprüche, **dadurch gekennzeichnet, dass** die zentralen Übertragungsmittel (4, 9, 10, 11, 12) als ein gesteuertes Sperrdifferentialgetriebe (9, 10, 11, 12) ausgestaltet sind, um eine starre Verbindung zwischen der ersten Halbwelle (3a) und der zweiten Halbwelle (3b) zu ermöglichten.

5. Antriebswelle (1) nach Anspruch 4, **dadurch gekennzeichnet, dass** die Antriebsbewegung der Stromquelle eine Drehbewegung ist und dass das gesteuerte Sperrdifferentialgetriebe (9, 10, 11, 12) als ein Reduktionsmittel (10, 12) zum Reduzieren der Drehbewegung der Drehbewegung der ersten (3a) und der zweiten (3b) Halbwelle in Bezug auf die Drehbewegung der Stromquelle ausgestaltet ist.

6. Antriebswelle (1) nach einem der vorhergehenden Ansprüche, **dadurch gekennzeichnet, dass** die Trennmittel (13a, 13b, 14a, 14b, 15, 16, 17, 18) eine Klauenkupplung (13a, 13b, 14a, 14b) umfassen.

7. Antriebswelle (1) nach einem der vorhergehenden Ansprüche, **dadurch gekennzeichnet, dass** die Trennmittel (13a, 13b, 14a, 14b, 15, 16, 17, 18) hydraulische, elektrische, pneumatische, mechanische oder magnetische Mittel (15, 16) umfassen.

8. Antriebswelle (1) nach einem der vorhergehenden Ansprüche, **dadurch gekennzeichnet, dass** das erste Trennmittel (13a, 14a, 15, 16, 17, 18) und das zweite Trennmittel (13b, 14b, 15, 16, 17, 18) eine zugehörige Feder (19a, 19b) umfassen, wobei die Federkraft die Trennung fördert.

9. Antriebswelle (1) nach Anspruch 7 und 8, **dadurch gekennzeichnet, dass** die hydraulischen, elektrischen, pneumatischen, mechanischen oder magnetischen Mittel (15, 16) entgegen der Federkraft der zugehörigen Feder (19a, 19b) wirken, um die Übertragung durch die zugehörigen Übertragungsmittel (6a, 7a, 8a, 13a, 14a, 6b, 7b, 8b, 13b, 14b) zu erreichen.

10. Antriebswelle (1) nach einem der vorhergehenden Ansprüche, **dadurch gekennzeichnet, dass** diese als eine Lenkwelle ausgestaltet ist.

11. Kraftfahrzeug oder Anhänger, umfassend mindestens eine Antriebswelle (1) nach einem der vorhergehenden Ansprüche.

12. Kraftfahrzeug oder Anhänger nach Anspruch 11, **dadurch gekennzeichnet, dass** das Kraftfahrzeug oder der Anhänger mindestens eine erste Antriebswelle (1) und eine zweite Antriebswelle (1) nach einem der Ansprüche 1 bis 10 umfassen, wobei die Übertragung der ersten (6a, 7a, 8a, 13a, 14a) und zweiten (6b, 7b, 8b, 13b, 14b) Übertragungsmittel der ersten Antriebswelle (1) und die Übertragung der ersten (6a, 7a, 8a, 13a, 14a) und zweiten (6b, 7b, 8b, 13b, 14b) Übertragungsmittel der zweiten Antriebswelle (1) alle separat über die zugehörigen Trennmittel (13a, 14a, 13b, 14b, 15, 16, 17, 18) getrennt werden können.

13. Verfahren zum Anpassen einer Antriebswelle (1), umfassend:
ein Differentialgetriebe (9, 10, 11, 12) zum Koppeln der Antriebswelle (1) mit einer Stromquelle;
einen ersten Radflansch (5a) an ihrem ersten Ende und einen zweiten Randflansch (5b) an ihrem zweiten Ende;
eine erste Halbwelle (3a), die den ersten Radflansch (5a) mit dem Differentialgetriebe (9, 10, 11, 12) verbindet, und eine zweite Halbwelle (3b), die den zweiten Radflansch (5b) mit dem Differentialgetriebe (9, 10, 11, 12) verbindet;
erste Übertragungsmittel (6a, 7a, 8a, 13a, 14a) zum Übertragen einer Drehbewegung der ersten Halbwelle (3a) in eine Drehbewegung des ersten Radflansches (5a);
zweite Übertragungsmittel (6b, 7b, 8b, 13b, 14b) zum Übertragen einer Drehbewegung der zweiten Halbwelle (3b) zu einer Drehbewegung des zweiten Radflansches (5b);
erste Trennmittel (13a, 14a, 15, 16, 17, 18) zum Trennen der Übertragung der ersten Übertragungsmittel (6a, 7a, 8a, 13a, 14a);
zweite Trennmittel (13b, 14b, 15, 16, 17, 18) zum Trennen der Übertragung der zweiten Übertragungsmittel (6b, 7b, 8b, 13b, 14b);
**dadurch gekennzeichnet, dass** das Differentialgetriebe (9, 10, 11, 12) überbrückt ist, um die Halbwellen (3a, 3b) starr miteinander zu verbinden.

14. Verfahren zum Anpassen einer Antriebswelle (1), umfassend:
ein Differentialgetriebe (9, 10, 11, 12) zum Koppeln der Antriebswelle (1) mit einer Stromquelle;
einen ersten Radflansch (5a) an ihrem ersten Ende und einen zweiten Radflansch (5b) an ihrem zweiten Ende;
eine erste Halbwelle (3a), die den ersten Radflansch (5a) mit dem Differentialgetriebe (9, 10, 11, 12) verbindet, und eine zweite Halbwelle (3b), die den zweiten Radflansch (5b) mit dem Differentialgetriebe (9, 10, 11, 12) verbindet;
erste Übertragungsmittel (6a, 7a, 8a, 13a, 14a) zum Übertragen einer Drehbewegung der ersten Halbwelle (3a) in eine Drehbewegung des ersten Radflansches (5a);
zweite Übertragungsmittel (6b, 7b, 8b, 13b, 14b) zum Übertragen einer Drehbewegung der zweiten Halbwelle (3b) zu einer Drehbewegung des zweiten Radflansches (5b) ;
**dadurch gekennzeichnet dass** erste Trennmittel (13a, 14a, 15, 16, 17, 18) am Ende der ersten Halbwelle (3a) bereitgestellt sind, um die Übertragung der ersten Übertragungsmittel (6a, 7a, 8a, 13a, 14a) zu trennen, und dadurch, dass zweite Trennmittel (13b, 14b, 15, 16, 17, 18) am Ende der zweiten Halbwelle (3b) zum Trennen der Übertragung der zweiten Übertragungsmittel (6b, 7b, 8b, 13b, 14b) bereitgestellt sind, und dadurch, dass das Differentialgetriebe (9, 10, 11, 12) überbrückt ist, um die Halbwellen (3a, 3b) starr miteinander zu verbinden.

15. Verfahren zum Anpassen einer Antriebswelle (1), umfassend:
ein gesteuertes Differentialgetriebe (9, 10, 11, 12) zum Koppeln der Antriebswelle (1) mit einer Stromquelle;
einen ersten Radflansch (5a) an ihrem ersten Ende und einen zweiten Randflansch (5b) an ihrem zweiten Ende;
eine erste Halbwelle (3a), die den ersten Radflansch (5a) mit dem gesteuerten Differentialgetriebe (9, 10, 11, 12) verbindet, und eine zweite Halbwelle (3b), die den zweiten Radflansch (5b) mit dem gesteuerten Differentialgetriebe (9, 10, 11, 12) verbindet;
erste Übertragungsmittel (6a, 7a, 8a, 13a, 14a) zum Übertragen einer Drehbewegung der ersten Halbwelle (3a) in eine Drehbewegung des ersten Radflansches (5a);
zweite Übertragungsmittel (6b, 7b, 8b, 13b, 14b) zum Übertragen einer Drehbewegung der zweiten Halbwelle (3b) zu einer Drehbewegung des zweiten Radflansches (5b);
**dadurch gekennzeichnet dass** erste Trennmittel (13a, 14a, 15, 16, 17, 18) am Ende der ersten Halbwelle (3a) bereitgestellt sind, um die Übertragung der ersten Übertragungsmittel (6a, 7a, 8a, 13a, 14a) zu trennen,
und dadurch, dass zweite Trennmittel (13b, 14b, 15, 16, 17, 18) am Ende der zweiten Halbwelle (3b) bereitgestellt sind, um die Übertragung der zweiten Übertragungsmittel (6b, 7b, 8b, 13b, 14b) zu trennen.

16. Verfahren nach Anspruch 14 oder 15, **dadurch gekennzeichnet, dass** die ersten Übertragungsmittel (6a, 7a, 8a, 13a, 14a) erste Endreduktionsmittel (6a, 7a, 8a) zum Reduzieren der Drehbewegung des ersten Radflansches (5a) in Bezug auf die Drehbewegung der ersten Halbwelle (3a) umfassen, und die zweiten Übertragungsmittel (6b, 7b, 8b, 13b, 14b) zweite Endreduktionsmittel (6b, 7b, 8b) zum Reduzieren der Drehbewegung des zweiten Radflansches (5b) in Bezug auf die Drehbewegung der zweiten Halbwelle (3b) umfassen, und dadurch, dass die ersten Trennmittel (13a, 14a, 15, 16, 17, 18) zwischen den ersten Endreduktionsmitteln (6a, 7a, 8a) und dem ersten Radflansch (5a) angeordnet sind und die zweiten Trennmittel (13b, 14b, 15, 16, 17, 18) zwischen den zweiten Endreduktionsmitteln (6b, 7b, 8b) und dem zweiten Radflansch (5b) angeordnet sind.

## Revendications

1. Arbre de transmission (1) pour un véhicule à moteur ou une remorque, comprenant:
- des moyens de couplage (2) pour coupler l'arbre de transmission (1) à une source de puissance;
- un premier flasque de roue (5a) à sa première extrémité et un deuxième flasque de roue (5b) à sa deuxième extrémité;
- un premier demi-arbre (3a) qui connecte le premier flasque de roue (5a) aux moyens de couplage (2) et un deuxième demi-arbre (3b) qui connecte le deuxième flasque de roue (5b) aux moyens de couplage (2);
- des moyens de transmission centraux (4, 9, 10, 11, 12) pour transmettre un mouvement d'entraînement de la source de puissance à un mouvement de rotation des demi-arbres (3a, 3b);
- des premiers moyens de transmission (6a, 7a, 8a, 13a, 14a) pour transmettre un mouvement de rotation du premier demi-arbre (3a) à un mouvement de rotation du premier flasque de roue (5a);
- des deuxièmes moyens de transmission (6b, 7b, 8b, 13b, 14b) pour transmettre un mouvement de rotation du deuxième demi-arbre (3b) à un mouvement de rotation du deuxième flasque de roue (5b);
- des premiers moyens de déconnexion (13a, 14a, 15, 16, 17, 18) pour déconnecter la transmission des premiers moyens de transmission (6a, 7a, 8a, 13a, 14a); et
- des deuxièmes moyens de déconnexion (13b, 14b, 15, 16, 17, 18) pour déconnecter la transmission des deuxièmes moyens de transmission (6b, 7b, 8b, 13b, 14b),
**caractérisé en ce que**:
- le premier demi-arbre (3a) et le deuxième demi-arbre (3b) peuvent être ou sont connectés de façon rigide l'un à l'autre;
- la transmission des premiers moyens de transmission (6a, 7a, 8a, 13a, 14a) et la transmission des deuxièmes moyens de transmission (6b, 7b, 8b, 13b, 14b) peuvent être déconnectées séparément au moyen des premiers (13a, 14a, 15, 16, 17, 18) ou des deuxièmes (13b, 14b, 15, 16, 17, 18) moyens de déconnexion, respectivement.

2. Arbre d'entraînement (1) selon la revendication 1, **caractérisé en ce que** les premiers moyens de transmission (6a, 7a, 8a, 13a, 14a) comprennent des premiers moyens de réduction d'extrémité (6a, 7a, 8a) pour réduire le mouvement de rotation du premier flasque de roue (5a) par rapport au mouvement de rotation du premier demi-arbre (3a), et les deuxièmes moyens de transmission (6b, 7b, 8b, 13b, 14b) comprennent des deuxièmes moyens de réduction d'extrémité (6b, 7b, 8b) pour réduire le mouvement de rotation du deuxième flasque de roue (5b) par rapport au mouvement de rotation du deuxième demi-arbre (3b), et **en ce que** les premiers moyens de déconnexion (13a, 14a, 15, 16, 17, 18) sont positionnés entre les premiers moyens de réduction d'extrémité (6a, 7a, 8a) et le premier flasque de roue (5a), et les deuxièmes moyens de déconnexion (13b, 14b, 15, 16, 17, 18) sont positionnés entre les deuxièmes moyens de réduction d'extrémité (6b, 7b, 8b) et le deuxième flasque de roue (5b).

3. Arbre d'entraînement (1) selon la revendication 2, **caractérisé en ce que** les moyens de réduction d'extrémité (6a, 7a, 8a, 6b, 7b, 8b) sont conçus comme un système d'engrenages planétaires (6a, 7a, 8a, 6b, 7b, 8b).

4. Arbre d'entraînement (1) selon l'une des revendications précédentes, **caractérisé en ce que** les moyens de transmission centraux (4, 9, 10, 11, 12) sont conçus comme un engrenage différentiel à glissement contrôlé (9, 10, 11, 12) dans le but de rendre possible une connexion rigide entre le premier demi-arbre (3a) et le deuxième demi-arbre (3b).

5. Arbre d'entraînement (1) selon la revendication 4, **caractérisé en ce que** le mouvement d'entraînement de la source de puissance est un mouvement de rotation, et **en ce que** l'engrenage différentiel à glissement contrôlé (9, 10, 11, 12) est conçu comme des moyens de réduction (10, 12) pour réduire le mouvement de rotation des premier (3a) et deuxième (3b) demi-arbres par rapport au mouvement de rotation de la source de puissance.

6. Arbre d'entraînement (1) selon l'une des revendications précédentes, **caractérisé en ce que** les moyens de déconnexion (13a, 13b, 14a, 14b, 15, 16, 17, 18) comprennent un embrayage à griffes (13a, 13b, 14a, 14b).

7. Arbre d'entraînement (1) selon l'une des revendications précédentes, **caractérisé en ce que** les moyens de déconnexion (13a, 13b, 14a, 14b, 15, 16, 17, 18) comprennent des moyens hydrauliques, électriques, pneumatiques, mécaniques ou magnétiques (15, 16).

8. Arbre d'entraînement (1) selon l'une des revendications précédentes, **caractérisé en ce que** les premiers moyens de déconnexion (13a, 14a, 15, 16, 17, 18) et les deuxièmes moyens de déconnexion (13b, 14b, 15, 16, 17, 18) comprennent un ressort respectif (19a, 19b), dont la force de ressort favorise la déconnexion.

9. Arbre d'entraînement (1) selon les revendications 7 et 8, **caractérisé en ce que** les moyens hydrauliques, électriques, pneumatiques, mécaniques ou magnétiques (15, 16) contrecarrent la force de ressort du ressort respectif (19a, 19b) dans le but de réaliser une transmission par les moyens de transmission respectifs (6a, 7a, 8a, 13a, 14a, 6b, 7b, 8b, 13b, 14b).

10. Arbre d'entraînement (1) selon l'une des revendications précédentes, **caractérisé en ce qu'**il est conçu comme un arbre de direction.

11. Véhicule à moteur ou remorque comprenant au moins un arbre d'entraînement (1) selon l'une des revendications précédentes.

12. Véhicule à moteur ou remorque selon la revendication 11, caractérisé(e) en ce que ledit véhicule à moteur ou ladite remorque comprend au moins un premier arbre d'entraînement (1) et un deuxième arbre d'entraînement (1) selon l'une des revendication 1 à 10, dans lequel la transmission des premiers (6a, 7a, 8a, 13a, 14a) et des deuxièmes (6b, 7b, 8b, 13b, 14b) moyens de transmission du premier arbre d'entraînement (1) et la transmission des premiers (6a, 7a, 8a, 13a, 14a) et des deuxièmes (6b, 7b, 8b, 13b, 14b) moyens de transmission du deuxième arbre d'entraînement (1) peuvent toutes être déconnectées séparément au moyen des moyens de déconnexion respectifs (13a, 14a, 13b, 14b, 15, 16, 17, 18).

13. Procédé pour adapter un arbre d'entraînement (1), comprenant:
- un engrenage différentiel (9, 10, 11, 12) pour coupler l'arbre d'entraînement (1) à une source de puissance;
- un premier flasque de roue (5a) à sa première extrémité et un deuxième flasque de roue (5b) à sa deuxième extrémité;
- un premier demi-arbre (3a) qui connecte le premier flasque de roue (5a) à l'engrenage différentiel (9, 10, 11, 12) et un deuxième demi-arbre (3b) qui connecte le deuxième flasque de roue (5b) à l'engrenage différentiel (9, 10, 11, 12) ;
- des premiers moyens de transmission (6a, 7a, 8a, 13a, 14a) pour transmettre un mouvement de rotation du premier demi-arbre (3a) à un mouvement de rotation du premier flasque de roue (5a);
- des deuxièmes moyens de transmission (6b, 7b, 8b, 13b, 14b) pour transmettre un mouvement de rotation du deuxième demi-arbre (3b) à un mouvement de rotation du deuxième flasque de roue (5b);
- des premiers moyens de déconnexion (13a, 14a, 15, 16, 17, 18) pour déconnecter la transmission des premiers moyens de transmission (6a, 7a, 8a, 13a, 14a); et
- des deuxièmes moyens de déconnexion (13b, 14b, 15, 16, 17, 18) pour déconnecter la transmission des deuxièmes moyens de transmission (6b, 7b, 8b, 13b, 14b),
**caractérisé en ce que** l'engrenage différentiel (9, 10, 11, 12) est ponté en vue de connecter de façon rigide les demi-arbres (3a, 3b) l'un à l'autre.

14. Procédé pour adapter un arbre d'entraînement (1), comprenant:
- un engrenage différentiel (9, 10, 11, 12) pour coupler l'arbre d'entraînement (1) à une source de puissance;
- un premier flasque de roue (5a) à sa première extrémité et un deuxième flasque de roue (5b) à sa deuxième extrémité;
- un premier demi-arbre (3a) qui connecte le premier flasque de roue (5a) à l'engrenage différentiel (9, 10, 11, 12) et un deuxième demi-arbre (3b) qui connecte le deuxième flasque de roue (5b) à l'engrenage différentiel (9, 10, 11, 12);
- des premiers moyens de transmission (6a, 7a, 8a, 13a, 14a) pour transmettre un mouvement de rotation du premier demi-arbre (3a) à un mouvement de rotation du premier flasque de roue (5a);
- des deuxièmes moyens de transmission (6b, 7b, 8b, 13b, 14b) pour transmettre un mouvement de rotation du deuxième demi-arbre (3b) à un mouvement de rotation du deuxième flasque de roue (5b),
**caractérisé en ce que** des premiers moyens de déconnexion (13a, 14a, 15, 16, 17, 18) sont prévus à l'extrémité du premier demi-arbre (3a) pour déconnecter la transmission des premiers moyens de transmission (6a, 7a, 8a, 13a, 14a), **en ce que** des deuxièmes moyens de déconnexion (13b, 14b, 15, 16, 17, 18) sont prévus à l'extrémité du deuxième demi-arbre (3b) pour déconnecter la transmission des deuxièmes moyens de transmission (6b, 7b, 8b, 13b, 14b), et **en ce que** l'engrenage différentiel (9, 10, 11, 12) est ponté dans le but de connecter de façon rigide les demi-arbres (3a, 3b) l'un à l'autre.

15. Procédé pour adapter un arbre d'entraînement (1), comprenant:
- un engrenage différentiel à glissement contrôlé (9, 10, 11, 12) pour coupler l'arbre d'entraînement (1) à une source de puissance;
- un premier flasque de roue (5a) à sa première extrémité et un deuxième flasque de roue (5b) à sa deuxième extrémité;
- un premier demi-arbre (3a) qui connecte le premier flasque de roue (5a) à l'engrenage différentiel à glissement contrôlé (9, 10, 11, 12) et un deuxième demi-arbre (3b) qui connecte le deuxième flasque de roue (5b) à l'engrenage différentiel à glissement contrôlé (9, 10, 11, 12);
- des premiers moyens de transmission (6a, 7a, 8a, 13a, 14a) pour transmettre un mouvement de rotation du premier demi-arbre (3a) à un mouvement de rotation du premier flasque de roue (5a);
- des deuxièmes moyens de transmission (6b, 7b, 8b, 13b, 14b) pour transmettre un mouvement de rotation du deuxième demi-arbre (3b) à un mouvement de rotation du deuxième flasque de roue (5b),
**caractérisé en ce que** des premiers moyens de déconnexion (13a, 14a, 15, 16, 17, 18) sont prévus à l'extrémité du premier demi-arbre (3a) pour déconnecter la transmission des premiers moyens de transmission (6a, 7a, 8a, 13a, 14a), et **en ce que** des deuxièmes moyens de déconnexion (13b, 14b, 15, 16, 17, 18) sont prévus à l'extrémité du deuxième demi-arbre (3b) pour déconnecter la transmission des deuxièmes moyens de transmission (6b, 7b, 8b, 13b, 14b).

16. Procédé selon la revendication 14 ou 15, **caractérisé en ce que** les premiers moyens de transmission (6a, 7a, 8a, 13a, 14a) comprennent des premiers moyens de réduction d'extrémité (6a, 7a, 8a) pour réduire le mouvement de rotation du premier flasque de roue (5a) par rapport au mouvement de rotation du premier demi-arbre (3a), et les deuxièmes moyens de transmission (6b, 7b, 8b, 13b, 14b) comprennent des deuxièmes moyens de réduction d'extrémité (6b, 7b, 8b) pour réduire le mouvement de rotation du deuxième flasque de roue (5b) par rapport au mouvement de rotation du deuxième demi-arbre (3b), et **en ce que** les premiers moyens de déconnexion (13a, 14a, 15, 16, 17, 18) sont positionnés entre les premiers moyens de réduction d'extrémité (6a, 7a, 8a) et le premier flasque de roue (5a), et les deuxièmes moyens de déconnexion (13b, 14b, 15, 16, 17, 18) sont positionnés entre les deuxièmes moyens de réduction d'extrémité (6b, 7b, 8b) et le deuxième flasque de roue (5b).
